# EUROPÄISCHE PATENTSCHRIFT

(11) **EP 4 067 710 B1**
(45) Veröffentlichungstag und Bekanntmachung des Hinweises auf die Patenterteilung: **09.10.2024**
(21) Anmeldenummer: 21165498.3
(22) Anmeldetag: 29.03.2021
(51) Int. Cl.: F16K 15/03, F16K 24/02, F16K 24/06, A62C 33/04, A62C 35/20, E03B 9/02, E03B 9/04, F16L 55/07

(54) **SCHLAUCHKOPPLUNG FÜR EINEN HYDRANTEN UND HYDRANT**
HOSE COUPLING FOR A HYDRANT AND HYDRANT
RACCORD DE TUYAU POUR UNE BOUCHE D'INCENDIE ET BOUCHE D'INCENDIE

(43) Veröffentlichungstag der Anmeldung: 05.10.2022
(73) Patentinhaber: vonRoll infratec (investment) ag, 6020 Emmenbrücke (CH)
(72) Erfinder: WENGER, Sascha, 4702 Oensingen (CH)
(74) Vertreter: Troesch Scheidegger Werner AG

(56) Entgegenhaltungen:
- DE-A1- 102015 204 182
- DE-U1- 20 113 917
- DE-U1- 202012 001 005
- DE-U1- 202012 001 007

## Beschreibung

Die vorliegende Erfindung betrifft eine Schlauchkopplung für einen Hydranten und einen Hydranten mit einer solchen Schlauchkopplung.

Hydranten sind mit einem Wasserverteilungssystem verbunden und stellen eine Armatur zur Entnahme von Wasser dar, um der Feuerwehr aber auch öffentlichen und privaten Nutzern die Wasserentnahme aus dem öffentlichen Wasserverteilungssystem zu ermöglichen. Der Netzdruck im Wasserverteilungssystem beträgt typischerweise ca. 6 bis 9 bar. Allgemein werden Hydranten unterschieden zwischen Überflurhydrant und Unterflurhydrant. Der Überflurhydrant ist oberirdisch fest installiert und hat Auslässe, in welche Kopplungen mit z.B. Klauen zur Herstellung einer Bajonettverbindung mit einem Gegenpart an einem Feuerwehrschlauch eingeschraubt werden können. Der Unterflurhydrant ist unterirdisch installiert und durch eine Bodenabdeckung von oberhalb verdeckt. Somit ist der Unterflurhydrant eine unter dem Niveau des Bodens gelegene Wasserentnahmestelle, die durch die Bodenabdeckung verschlossen ist.

Hydranten umfassen ein Steigrohr mit einem Innenraum und einer Aussenseite, wobei der Innenraum in den Anschluss zur Wasserentnahme mündet. Zum Öffnen und Sperren von Hydranten sind diese mit einem Hauptventil versehen, welches einen Hauptventilkörper und einen mit dem Hauptventilkörper abdichtbaren Dichtsitz umfasst. Der Hauptventilkörper ist mit einem Ende einer Spindelstange verbunden, durch welche der Hauptventilkörper axial hoch und runter geführt werden kann.

Die Anordnung aus Hauptventilkörper und Dichtsitz ist im Bereich eines bodenseitigen Einlaufrohrs und somit unterhalb der sogenannten Frostgrenze angeordnet. Solange sich der Hauptventilkörper in der Schliessstellung befindet, sollte der Innenraum des Steigrohrs gegenüber dem Hydranteneinlauf frostsicher abgedichtet sein, sodass es zu keinem Gefrieren von noch im Innenraum des Steigrohrs befindlichem Wasser kommt.

Es gibt Bestrebungen darin, dass nach dem Absperren des Hauptventils noch im Innenraum des Steigrohrs befindliches Wasser, auch Restwasser genannt, nach Aussen abgeleitet wird, damit der Innenraum des Steigrohrs frei von Wasser ist, welches ansonsten hierin gefrieren könnte. Hierdurch sollen Beschädigungen des Hydranten verhindert werden, welche durch gefrierendes Wasser verursacht werden könnten. Ebenso kann das Ableiten des Wassers aus dem Innenraum des Steigrohrs gegen Korrosion im Inneren des Hydranten schützen sowie gegen Keimbildung durch abgestandenes Wasser vorbeugen.

Es sind Entwässerungen bekannt, welche im Bereich des Hauptventilkörpers vorgesehen sind und in der Schliessstellung des Hauptventilkörpers eine Fluidleitung nach aussen in den Boden eröffnen können. Durch diese Fluidleitung kann das Wasser (an tiefer Stelle) nach aussen gelangen und ins Erdreich versickern.

Es sind Hydranten bekannt, deren Schlauchkopplung jeweils mit einem Rückflussverhinderer versehen sind. Diese Rückflussverhinderer öffnen lediglich in Richtung des ausströmenden Wassers und sind ansonsten verschlossen. Somit wird das Rückdrücken von Wasser aus z.B. einem Feuerwehrschlauch und möglicherweise das Eindringen von Fremdstoffen in das Innere des Hydranten verhindert.

Ein Nachteil im Stand der Technik besteht darin, dass das restliche Wasser im Inneren des Hydranten nicht oder nicht vollständig nach aussen entwässert bzw. abgeleitet werden kann. Eine Ursache hierfür kann darin liegen, dass der Rückflussverhinderer im geschlossenen Zustand eine Luftzufuhr in das Innere des Hydranten absperrt, sodass sich ein unvorteilhaft hoher Unterdruck im Inneren des Hydranten gegenüber dem Druck der Aussenatmosphäre aufbauen kann. Dieser Unterdruck kann sich durch die Entwässerung und gleichzeitig in Ermangelung eines Druckausgleichs aufbauen. Somit verbleibt im Stand der Technik oftmals Wasser im Inneren des Hydranten, welches gefrieren kann und somit Beschädigungen verursacht. Ebenso können sich in dem Restwasser Keime bilden.

Die DE 201 13 917 U1 offenbart ein Schlauchanschlussventil mit einem Einlass und einem Auslass, wobei in Strömungsrichtung vom Einlass zum Auslass ein Rückschlagventil und anschliessend ein Belüftungsventil vorgesehen sind.

Die DE 20 2012 001 005 U1 offenbart eine Feuerwehrkupplung mit einem Einlass und einem Auslass, wobei in Strömungsrichtung vom Einlass zum Auslass ein Belüftungsventil vorgesehen ist.

Die DE 10 2015 204 182 A1 offenbart einen Rückflussverhinderer für einen Unterflurhydranten mit einem Einlass und einem Auslass, wobei in Strömungsrichtung vom Einlass zum Auslass ein Rückschlagventil und anschliessend ein Belüftungsventil vorgesehen sind.

Die DE 20 2012 001 007 U1 offenbart ein Standrohr mit einem Einlass, einem Auslass und einem dazwischenliegenden Ventil, wobei in einem Ventildeckel eines Ventiloberteils ein Belüftungsventil vorgesehen ist.

Die Aufgabe der vorliegenden Erfindung besteht darin, eine Schlauchkopplung anzugeben, welche die vorstehend genannten Nachteile nicht aufweist.

Diese Aufgabe wird durch eine Schlauchkopplung mit den in Anspruch 1 angegebenen Merkmalen gelöst. Vorteilhafte Ausführungsvarianten sowie ein Hydrant mit einer Schlauchkopplung sind in weiteren Ansprüchen angegeben.

Erfindungsgemäss umfasst eine Schlauchkopplung für einen Hydranten eine Belüftungseinrichtung. Die Belüftungseinrichtung umfasst ein Rückschlagventil, welches in einer in einem Aussenflansch der Schlauchkopplung eingetragenen Aufnahme aufgenommen ist.

Somit ist eine Schlauchkopplung mit einer Belüftungseinrichtung vorgestellt, welche einen Unterdruck im Inneren des Hydranten gegenüber dem Druck der Aussenatmosphäre im Wesentlichen ausgleicht oder reduziert. Die Belüftungseinrichtung eröffnet in einem ersten Betriebszustand, in welchem der Hydrant geschlossen ist, einen Strömungspfad zwischen Aussenatmosphäre und dem Inneren des Hydranten. Somit ist ein Druckausgleich auch dann ermöglicht, wenn die Schlauchkopplung mit einem Rückflussverhinderer versehen ist. Der Rückflussverhinderer wird hierbei überbrückt. Die Belüftungseinrichtung sperrt hingegen den Strömungspfad zwischen dem Inneren des Hydranten und Aussenatmosphäre in einem zweiten Betriebszustand, in welchem der Hydrant geöffnet ist. In diesem Zustand übersteigt die Differenz zwischen dem Druck im Inneren des Hydranten und Aussenatmosphäre einen vorbestimmten Schwellenwert, wodurch die Belüftungseinrichtung den Strömungspfad sperrt. Somit dringt vorteilhaft kein Wasser über die Belüftungseinrichtung nach aussen.

In einer vorteilhaften Ausführungsform der Schlauchkopplung umfasst das Rückschlagventil eine wenigstens abschnittsweise in die Aufnahme einsetzbare Buchse und einen wenigstens abschnittsweise in die Buchse eingesetzten Ventilkörper. Dieser Ventilkörper ist in Axialrichtung der Buchse verstellbar. Im geschlossenen Zustand des Hydranten, d.h. solange der Hydrant nicht unter Druck steht, befindet sich der Ventilkörper in einer Stellung, in welcher ein Strömungspfad zwischen dem Inneren des Hydranten und Aussenatmosphäre zugelassen ist. Sobald der Hydrant unter Druck steht, d.h. geöffnet ist, befindet sich der Ventilkörper in einer Stellung, in welcher der Strömungspfad zwischen dem Inneren des Hydranten und Aussenatmosphäre abgesperrt ist.

In einer vorteilhaften Ausführungsform der Schlauchkopplung umfasst der Ventilkörper einen Zylinderabschnitt, welcher wenigstens abschnittsweise in die Buchse eingesetzt ist und in Axialrichtung hierin führbar ist, und einen am Zylinderabschnitt anschliessenden Anschlag. Der Zylinderkörper kann zuverlässig axial und spielfrei innerhalb der Buchse geführt werden. Der Anschlag kann gegen ein Ende der Buchse anschlagen und somit einen Strömungspfad bzw. einen Belüftungspfad absperren. Sobald das Rückschlagventil öffnet, schlägt der Anschlag mit seiner distalen Seite gegen die Endfläche der Aufnahme an.

In diesem Zustand kann das Innere des Hydranten belüftet werden.

In einer vorteilhaften Ausführungsform der Schlauchkopplung ragt der Anschlag über dem Zylinderabschnitt radial vor. Der Anschlag kann pilzförmig ausgebildet sein. In einer weiteren vorteilhaften Ausführungsform der Schlauchkopplung ist der Anschlag in einem Abschnitt der Aufnahme zwischen der Buchse und einer Endfläche der Aufnahme verstellbar.

In einer vorteilhaften Ausführungsform der Schlauchkopplung umfasst das Rückschlagventil ferner eine Ringdichtung, welche angeordnet ist, den Anschlag im geschlossenen Zustand des Rückschlagventils gegenüber der dem Anschlag zugewandten Stirnseite der Buchse umfänglich abzudichten. Die Ringdichtung erlaubt eine zuverlässige Abdichtung zwischen der Buchse bzw. Stirnseite der Buchse und der zugewandten Fläche des Anschlags.

In einer vorteilhaften Ausführungsform der Schlauchkopplung ist die Ringdichtung in einem Abschnitt um den Zylinderabschnitt herum angelegt. Beispielsweise kann der Zylinderabschnitt mit einer Nut bzw. Ausnehmung versehen sein, in welche die Ringdichtung unter Spannung eingesetzt und fixiert werden kann.

In einer weiteren vorteilhaften Ausführungsform der Schlauchkopplung ist die dem Anschlag zugewandte Stirnseite der Buchse mit einer konisch ausgeformten Dichtfläche ausgebildet. Die Ausformung der Dichtfläche erlaubt im Zusammenwirken mit der Ringdichtung eine grossflächige, zuverlässige Abdichtung.

In einer vorteilhaften Ausführungsform der Schlauchkopplung ist die Buchse zylinderförmig ausgebildet und wenigstens abschnittsweise mit einem Aussengewinde versehen, ausgebildet zur gewindemässigen Aufnahme in ein korrespondierend in die Aufnahme eingetragenes Innengewinde. Somit kann das Rückschlagventil über die Buchse einfach in die Aufnahme eingeschraubt werden. Die Buchse kann an der radial nach aussen weisenden Stirnseite mit Schlitzen versehen sein, in welche ein Schraubendreher eingreifen kann. Die Installation und Wartung des gesamten Rückschlagventils erweisen sich somit als einfach und zuverlässig.

In einer vorteilhaften Ausführungsform der Schlauchkopplung ist der Anschlag an einer Seite, welche der Endfläche der Aufnahme zugewandt ist, mit wenigstens einem Vorsprung versehen. In einer weiteren vorteilhaften Ausführungsform der Schlauchkopplung ist der Anschlag an einer Seite, welche der Endfläche der Aufnahme zugewandt ist, konvex ausgebildet.

In einer vorteilhaften Ausführungsform der Schlauchkopplung umfasst das Rückschlagventil ferner ein federelastisches Rückstellelement, welches zwischen der Buchse und dem Ventilkörper eingespannt ist, wobei das federelastische Rückstellelement eine Kraft an den Ventilkörper in eine Richtung zum Öffnen des Rückschlagventils anlegt. Mit dem Wortlaut "Anlegen einer Kraft an den Ventilkörper in eine Richtung zum Öffnen des Rückschlagventils" ist eine Richtung gemeint, in welche der Ventilkörper gegen die Endfläche der Aufnahme gezwängt wird und somit der Strömungspfad zwischen Aussenatmosphäre und dem Inneren des Hydranten geöffnet ist.

In einer weiteren vorteilhaften Ausführungsform der Schlauchkopplung spannt das federelastische Rückstellelement den Ventilkörper gegenüber der Buchse derart federelastisch vor, dass der Anschlag gegen eine Endfläche der Aufnahme anschlägt. Sobald die Differenz zwischen dem Druck im Inneren des Hydranten und Aussenatmosphäre einen vorbestimmten Schwellenwert übersteigt, z.B. indem der Hydrant geöffnet wird, wird eine Kraft an den Zylinderkörper in entgegengesetzter Richtung angelegt, wobei diese Kraft die an den Zylinderabschnitt angelegte Federkraft übersteigt. Hierdurch wird der Zylinderabschnitt weiter in die Buchse verschoben, bis der Anschlag mit seiner zugewandten Fläche gegen die Stirnfläche der Buchse direkt oder indirekt anschlägt und hierbei den Strömungspfad absperrt, wodurch die Belüftungseinrichtung insg. den Strömungspfad sperrt. Beispielsweise kann der Zylinderabschnitt Abschnitte mit unterschiedlichen Durchmessern enthalten. Ein erster Abschnitt mit einem ersten Durchmesser kann als Aufnahme des Rückstellelements, z.B. eine Druckfeder, dienen, indem das Rückstellelement auf diesen Abschnitt aufgesteckt wird. Ein zweiter Abschnitt mit einem gegenüber dem ersten Abschnitt grösseren Durchmesser kann zur zuverlässigen axialen Führung des Ventilkörpers durch Anlage mit der Innenfläche der Buchse dienen.

Erfindungsgemäß umfasst die Belüftungseinrichtung ferner einen Belüftungspfad zwischen der Aufnahme und dem Inneren des Hydranten. Der Belüftungspfad umfasst dabei einen ersten Pfad, welcher sich im Aussenflansch zwischen der Aufnahme und einem Aussengewinde der Schlauchkopplung erstreckt. Ferner umfasst der Belüftungspfad einen am ersten Pfad anschliessenden zweiten Pfad. Dieser zweite Pfad ist als eine Aussparung ausgebildet, welche im Aussengewinde der Schlauchkopplung in Axialrichtung hiervon eingetragen ist. Die Ausgestaltung dieses Belüftungspfades erweist sich als sehr einfach und zuverlässig. Alternativ kann der zweite Pfad als Längsbohrung innerhalb des Materials des Aussenrandes der Schlauchkopplung ausgeführt sein.

In einer weiteren vorteilhaften Ausführungsform der Schlauchkopplung ist eine Öffnung des ersten Pfades aussermittig in die Endfläche der Aufnahme eingetragen. Die konvexe Ausformung des Anschlags im Zusammenwirken mit der aussermittig in die Endfläche der Aufnahme eingetragenen Öffnung des ersten Pfades verhindert ein Verschliessen der Öffnung des ersten Pfades durch den Anschlag, wenn dieser an die Endfläche der Aufnahme anstösst bzw. mittels Federkraft gezwängt wird. Der Anschlag schlägt mit seinem am weitesten vorragenden (axialmittigen) Abschnitt gegen die Endfläche der Aufnahme und belässt die Öffnung des ersten Pfades frei. Somit ist eine zuverlässige Belüftung bei einem zugleich konstruktiv geringen Aufwand ermöglicht. In einer vorteilhaften Ausführungsform umfasst die Schlauchkopplung einen Rückflussverhinderer. Der Rückflussverhinderer öffnet lediglich in Richtung des ausströmenden Wassers und ist ansonsten dicht verschlossen. Somit wird das Rückdrücken von Wasser aus z.B. einem Feuerwehrschlauch bzw. das Eindringen von Fremdstoffen in das Innere des Hydranten verhindert. Im Stand der Technik unterbindet der Rückflussverhinderer eine Belüftung, sodass sich ein unvorteilhaft hoher Unterdruck im Inneren des Hydranten aufbauen kann. Die erfindungsgemässe Schlauchkopplung überbrückt den Rückflussverhinderer mittels der Belüftungseinrichtung. Somit wird der Druck im Inneren des Hydranten zuverlässig an den Druck der Aussenatmosphäre angeglichen.

Die Erfindung betrifft ebenfalls einen Hydranten, welcher eine Schlauchkopplung nach einem der Ansprüche 1 bis 15 umfasst, ausgebildet zum Reduzieren einer Differenz zwischen dem Druck im Inneren des Hydranten und dem Druck der Aussenatmosphäre. Somit ist ein Hydrant geschaffen, welcher zuverlässig entwässert werden kann, wodurch ein mögliches Gefrieren von Restwasser im Inneren des Hydranten verhindert wird. Ebenfalls kann eine Keimbildung im Inneren des Hydranten durch abgestandenes Restwasser verhindert werden.

Es wird ausdrücklich darauf hingewiesen, dass die vorstehenden Ausführungsvarianten im Rahmen der Ansprüche beliebig kombinierbar sind. Lediglich diejenigen Kombinationen von Ausführungsvarianten sind ausgeschlossen, die durch die Kombination zu Widersprüchen führen würden.

Im Folgenden wird die vorliegende Erfindung anhand von in der Zeichnung dargestellten Ausführungsbeispielen weiter erläutert. Dabei zeigen:
- Fig. 1: eine Längsschnittansicht durch eine Schlauchkopplung mit einer Belüftungseinrichtung und einem installierten Rückflussverhinderer;
- Fig. 2: eine Längsschnittansicht durch eine Schlauchkopplung mit einer Belüftungseinrichtung und einem installierten Rückflussverhinderer in einer Perspektivdarstellung;
- Fig. 3: eine Längsschnittansicht durch eine Schlauchkopplung mit einer Belüftungseinrichtung in einer Perspektivdarstellung; und
- Fig. 4: eine vergrösserte Darstellung der Belüftungseinrichtung in einer Schnittansicht.

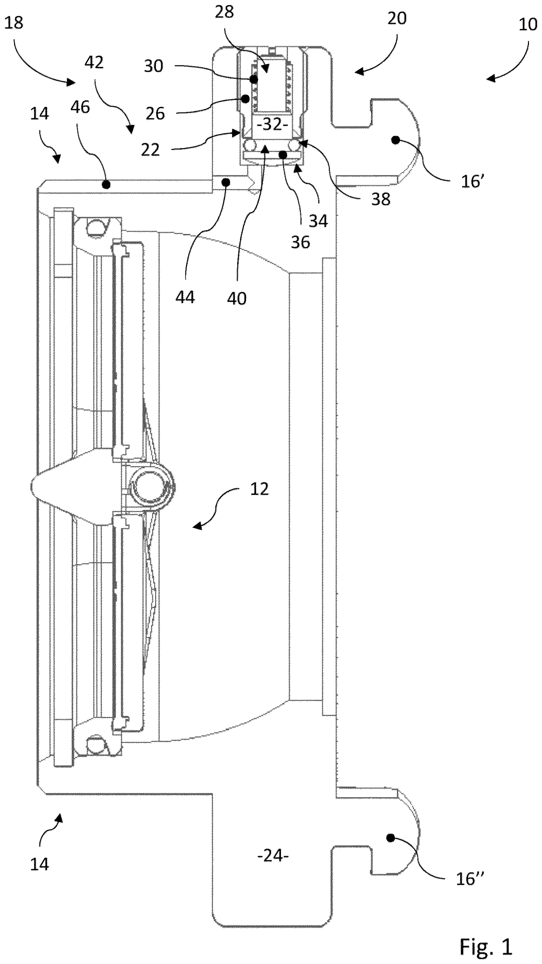

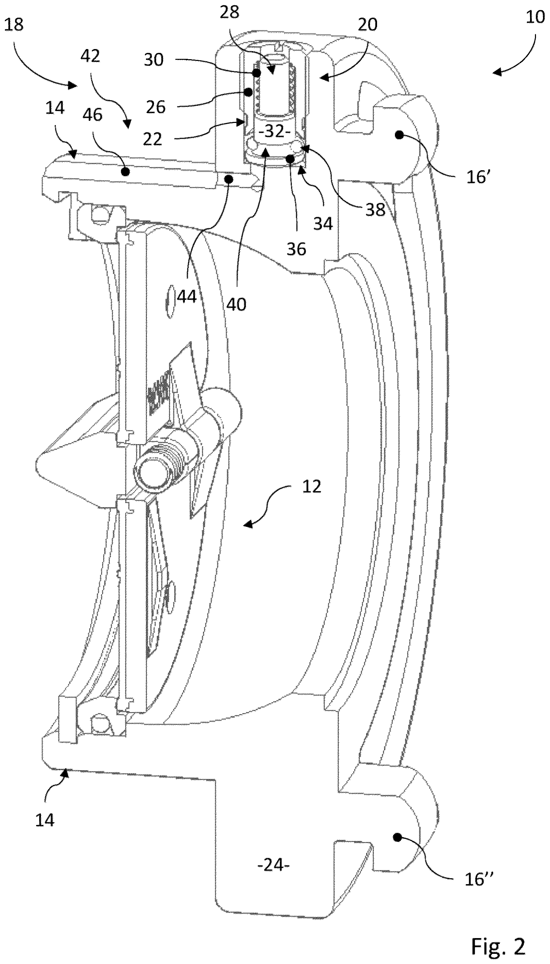

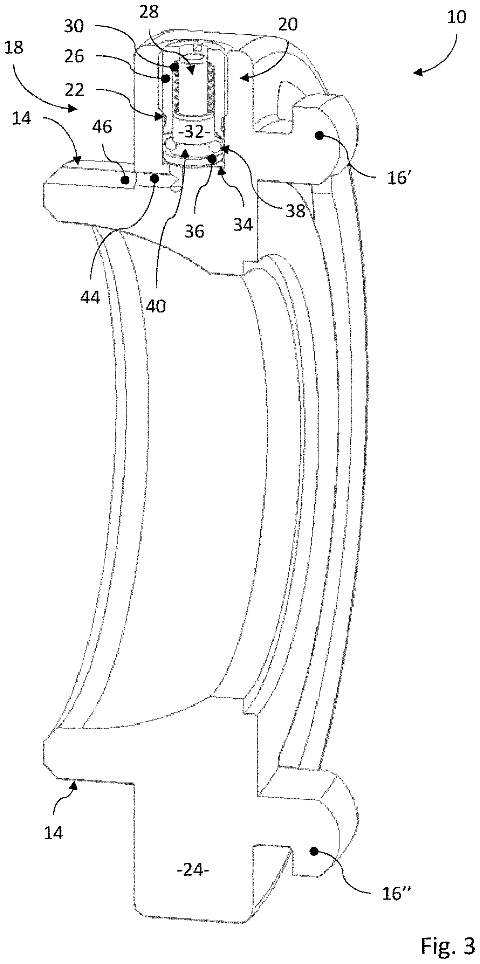

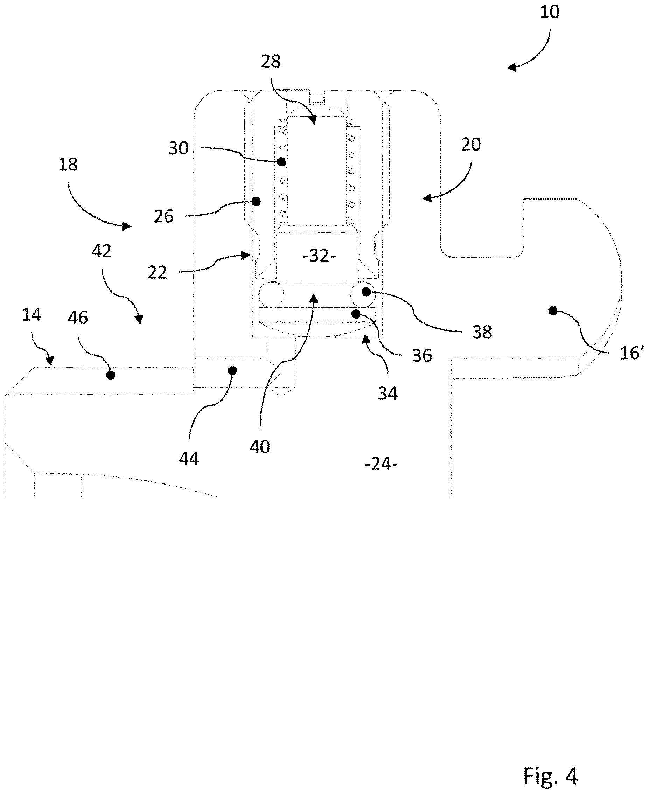

Die Figuren 1 - 4 zeigen jeweils eine Längsschnittansicht durch eine Schlauchkopplung 10 für einen Hydranten (nicht gezeigt) in unterschiedlichen Ansichten. Die Figuren 1 und 2 zeigen hierbei die Schlauchkopplung 10 mit einem installierten Rückflussverhinderer 12, während die Figuren 3 und 4 die Schlauchkopplung 10 in einer Schnittansicht ohne Rückflussverhinderer veranschaulichen.

Die Schlauchkopplung 10 kann über einen Gewindeabschnitt 14 in den Auslass eines Hydranten (nicht gezeigt) eingeschraubt werden. Die der Aussenseite zugewandte Seite der Schlauchkopplung 10 kann mit Klauen 16',16'' versehen sein, mittels welchen ein Bajonettverschluss mit korrespondierenden Abschnitten an z.B. einer Kopplung eines Feuerwehrschlauchs (nicht gezeigt) herstellbar ist.

Die Schlauchkopplung 10 umfasst eine Belüftungseinrichtung 18, welche ausgebildet ist, einen Druck im Inneren des Hydranten gegenüber dem Aussendruck im Wesentlichen auszugleichen. Die Belüftungseinrichtung 18 umfasst ein Rückschlagventil 20, welches in einer Aufnahme 22 aufgenommen ist, welche in einem Aussenflansch 24 der Schlauchkopplung 10 eingetragen ist. Die Aufnahme 22 kann als ein Sackloch ausgeführt sein, dessen Achse im Wesentlichen in Radialrichtung der Schlauchkopplung 10 ausgerichtet ist.

Das Rückschlagventil 20 umfasst eine wenigstens abschnittsweise in die Aufnahme 22 einsetzbare Buchse 26. Die Buchse 26 kann beispielsweise in die Aufnahme 22 eingeschraubt werden. Die Buchse 26 nimmt einen Ventilkörper 28 auf, welcher in Axialrichtung der Buchse 26 verstellbar ist. Zwischen Buchse 26 und Ventilkörper 28 kann ein federelastisches Rückstellelement 30 eingespannt P218120 sein, welches als eine Druckfeder ausgeführt sein kann. Das Rückstellelement 30 legt eine Kraft an den Ventilkörper 28 an, mittels welcher der Ventilkörper 28 gegen eine Endfläche 34 der Aufnahme 22 gedrückt wird.

Der Ventilkörper 28 weist einen Zylinderabschnitt 32 auf, welcher wenigstens abschnittsweise in die Buchse 26 eingesetzt ist. Hierbei steht der Aussenumfang des Zylinderabschnitts 32 in Anlage mit dem Innenumfang der Bohrung der Buchse 26, sodass der gesamte Ventilkörper 28 in Axialrichtung der Buchse 26 im Wesentlichen spielfrei führbar bzw. verstellbar ist. Der Ventilkörper 28 ist an einem Ende, welches der Endfläche 34 der Aufnahme 22 zugewandt ist, mit einem Anschlag 36 versehen. Der Anschlag 36 ragt in Relation zum Zylinderabschnitt 32 radial bzw. pilzförmig vor. Hierbei ist der Anschlag 36 in einem Abschnitt der Aufnahme 22 zwischen der Buchse 26 und der Endfläche 34 der Aufnahme 22 verstellbar. Obwohl nicht gezeigt, kann das Federelement 30 ausgelassen werden. In dem gezeigten Zustand steht der Hydrant nicht unter Druck und kann Luft von der Aussenumgebung durch die Belüftungseinrichtung 18 in das Innere des Hydranten strömen. Hierdurch kann sich im Inneren des Hydranten kein Unterdruck aufbauen und ist somit eine zuverlässige Entwässerung des Hydranten gewährleistet.

Sobald der Hydrant geöffnet wird, steigt der Druck im Inneren des Hydranten an und übersteigt den Druck der Aussenatmosphäre. Sobald die Differenz zwischen dem Druck im Inneren des Hydranten und Aussenatmosphäre einen vorbestimmten Schwellenwert übersteigt, wird eine Kraft an den Zylinderkörper 28 in entgegengesetzter Richtung angelegt, wobei diese Kraft die an den Zylinderabschnitt 28 angelegte Federkraft übersteigt. Hierdurch wird der Zylinderabschnitt 28 ein stückweit tiefer in die Buchse 26 verschoben, bis der Anschlag 36 mit seiner zugewandten Fläche gegen die Stirnfläche der Buchse 26 direkt oder indirekt anschlägt und hierbei den Strömungspfad absperrt, wodurch die Belüftungseinrichtung 18 insg. den Strömungspfad absperrt.

Zur zuverlässigen Abdichtung zwischen Buchse 26, bzw. Stirnseite der Buchse 26, und Anschlag 36 kann eine Ringdichtung 38 vorgesehen sein. Diese Ringdichtung 38 kann in eine um den Zylinderabschnitt 32 umfänglich eingetragene Nut 40 eingespannt sein. Die Ringdichtung 38 kann ferner flächig am Anschlag 36 anliegen. Ferner kann die dem Anschlag 36 zugewandte Stirnseite der Buchse 26 mit einer konisch ausgeformten Dichtfläche ausgebildet sein. In dieser Ausführung dichtet die Ringdichtung 38 den Anschlag 36 umfänglich gegenüber der dem Anschlag 36 zugewandten Stirnseite der Buchse 26 zuverlässig ab. In dieser Stellung ist ein Strömungspfad durch die Buchse 26 gesperrt bzw. abgedichtet (nicht gezeigt). Somit gelangt kein Wasser über die Belüftungseinrichtung 18 an die Aussenseite des Hydranten.

Die Belüftungseinrichtung umfasst ferner einen Belüftungspfad 42, wobei der Belüftungspfad 42 einen ersten Pfad 44, welcher sich im Aussenflansch 24 zwischen der Aufnahme 22 und dem Aussengewinde 14 der Schlauchkopplung 10 erstreckt, und einen am ersten Pfad 44 anschliessenden zweiten Pfad 46 umfasst, welcher als eine Aussparung ausgebildet ist, welche im Aussengewinde 14 der Schlauchkopplung 10 in Axialrichtung hiervon eingetragen ist. Obwohl nicht gezeigt, kann alternativ der zweite Pfad, z.B. am ersten Pfad 44 anschliessend, als Längsbohrung innerhalb des Materials des Aussenrandes der Schlauchkopplung 10 ausgeführt sein.

Wie zuvor erwähnt, eröffnet sich im druckfreien Zustand des Hydranten eine Fluidverbindung zwischen der Aussenseite und dem Inneren des Hydranten, wodurch eine Belüftung in das Innere des Hydranten ermöglicht wird. Hierdurch kann Aussenluft durch die Bohrung der Buchse 26 entlang des Zylinderkörpers 28 und über den eröffneten Ringspalt zwischen Buche 26 und Anschlag 36 in die Aufnahme 22 strömen. Von der Aufnahme 22 strömt die Aussenluft weiter über den ersten Pfad 44 und zweiten Pfad 46 in das Innere des Hydranten.

Sobald die Differenz zwischen dem Druck im Inneren des Hydranten und Aussenatmosphäre einen vorbestimmten Schwellenwert übersteigt, z.B. indem der Hydrant geöffnet wird, schliesst das Rückschlagventil 20 und wird diese Verbindung gesperrt. Somit dringt kein Wasser über die Belüftungseinrichtung 18 nach aussen.

Zusammengefasst nimmt das Rückschlagventil 20 zwei Zustände ein, nämlich einen ersten Zustand (Schliesszustand), in welchem der Anschlag 36 über die Ringdichtung 38 gegen die dem Anschlag 36 zugewandte Stirnseite der Buchse 26 anschlägt und abdichtet, und einen zweiten Zustand (Öffnungszustand), in welchem der Anschlag 36 mit seiner entgegengesetzten Seite gegen die Endfläche 34 der Aufnahme 22 anschlägt. Der erste Zustand ist hierbei ein Zustand, in welchem eine Differenz zwischen dem Druck im Inneren des Hydranten und Aussendruck einen vorbestimmten Schwellenwert überschreitet. Der zweite Zustand ist ein Zustand, in welchem im Wesentlichen Druckausgleich zwischen dem Druck im Inneren des Hydranten und Aussenatmosphäre vorliegt bzw. die Differenz zwischen dem Druck im Inneren des Hydranten und Aussendruck den vorbestimmten Schwellenwert unterschreitet.

Jene Seite des Anschlags 36, welche der Endfläche 34 der Aufnahme 22 zugewandt ist, kann mit einem im Wesentlichen mittig angeordneten Vorsprung versehen sein. In der in den Figuren gezeigten Ausführung ist der Anschlag an der betreffenden Seite konvex ausgebildet. Im geöffneten Zustand des Rückschlagventils 20 schlägt der Anschlag 36 somit mit seinem am weitesten vorragenden (axialmittigen) Abschnitt gegen die Endfläche 34 der Aufnahme 22. Ferner ist die Öffnung bzw. der Eingang des ersten Pfades 44 aussermittig in die Endfläche 34 der Aufnahme 22 eingetragen. Die konvexe Ausformung des Anschlags 36 im Zusammenwirken mit der aussermittig in die Endfläche 34 der Aufnahme 22 eingetragenen Öffnung des ersten Pfades 44 verhindert ein Verschliessen dieser Öffnung durch den Anschlag 36 im Zustand des geöffneten Rückschlagventils 20, d.h. auch wenn der Anschlag 36 gegen die Endfläche 34 der Aufnahme 22 anschlägt. Zusammengefasst schlägt der Anschlag 36 mit seinem am weitesten vorragenden (axialmittigen) Abschnitt gegen die Endfläche 34 der Aufnahme 22 an und belässt die Öffnung des ersten Pfades 44, bzw. dessen Eingang, frei. Somit ist eine zuverlässige Belüftung des Hydranten ermöglicht.

Wie zuvor beschrieben, kann die Schlauchkopplung 10 mit dem Rückflussverhinderer 12 versehen sein, um z.B. ein Rückdrücken von Wasser aus z.B. einem Feuerwehrschlauch und möglicherweise das Eindringen von Fremdstoffen in das Innere des Hydranten zu verhindern. Der Rückflussverhinderer 12 kann mittels der Belüftungseinrichtung 18 überbrückt werden. Somit kann trotz Vorsehens des Rückflussverhinderers 12 ein Ausgleich zwischen dem Druck im Inneren des Hydranten und dem Druck der Aussenatmosphäre hergestellt werden. Sobald der Hydrant unter Druck steht, z.B. indem der Hydrant geöffnet wird, schliesst das Rückschlagventil 20 und wird somit verhindert, dass Wasser über die Belüftungseinrichtung 18 nach aussen strömt.

## Patentansprüche

1. Schlauchkopplung (10) für einen Hydranten, wobei die Schlauchkopplung (10) eine Belüftungseinrichtung (18) umfasst, wobei die Belüftungseinrichtung (18) ein Rückschlagventil (20) umfasst, welches in einer in einem Aussenflansch (24) der Schlauchkopplung (10) eingetragenen Aufnahme (22) aufgenommen ist, wobei die Belüftungseinrichtung (18) ferner einen Belüftungspfad (42) zwischen der Aufnahme (22) und, im montierten Zustand, dem Inneren des Hydranten umfasst, **dadurch gekennzeichnet, dass** der Belüftungspfad (42) einen ersten Pfad (44) umfasst, welcher sich im Aussenflansch (24) zwischen der Aufnahme (22) und einem Aussengewinde (14) der Schlauchkopplung (10) erstreckt, und einen am ersten Pfad (44) anschliessenden zweiten Pfad (46) umfasst, welcher als eine Aussparung ausgebildet ist, welche im Aussengewinde (14) der Schlauchkopplung (10) in Axialrichtung hiervon eingetragen ist oder welcher als Längsbohrung innerhalb des Materials des Aussenrandes der Schlauchkopplung ausgeführt ist.

2. Schlauchkopplung (10) nach Anspruch 1, wobei das Rückschlagventil (20) eine wenigstens abschnittsweise in die Aufnahme (22) einsetzbare Buchse (26) und einen wenigstens abschnittsweise in die Buchse (26) eingesetzten Ventilkörper (28) umfasst, welcher in Axialrichtung der Buchse (26) verstellbar ist.

3. Schlauchkopplung (10) nach Anspruch 2, wobei der Ventilkörper (28) einen Zylinderabschnitt (32), welcher wenigstens abschnittsweise in die Buchse (26) eingesetzt ist und in Axialrichtung hierin führbar ist, und einen am Zylinderabschnitt (32) anschliessenden Anschlag (36) enthält.

4. Schlauchkopplung (10) nach Anspruch 3, wobei der Anschlag (36) über dem Zylinderabschnitt (32) radial vorragt.

5. Schlauchkopplung (10) nach Anspruch 3 oder 4, wobei der Anschlag (36) in einem Abschnitt der Aufnahme (22) zwischen der Buchse (26) und einer Endfläche (34) der Aufnahme (22) verstellbar ist.

6. Schlauchkopplung (10) nach einem der Ansprüche 3 bis 5, wobei das Rückschlagventil (20) ferner eine Ringdichtung (38) umfasst, welche angeordnet ist, den Anschlag (36) im geschlossenen Zustand des Rückschlagventils (20) gegenüber der dem Anschlag (36) zugewandten Stirnseite der Buchse (26) umfänglich abzudichten.

7. Schlauchkopplung (10) nach Anspruch 6, wobei die Ringdichtung (38) in einem Abschnitt um den Zylinderabschnitt (32) herum angelegt ist.

8. Schlauchkopplung (10) nach Anspruch 6 oder 7, wobei die dem Anschlag (36) zugewandte Stirnseite der Buchse (26) mit einer konisch ausgeformten Dichtfläche ausgebildet ist.

9. Schlauchkopplung (10) nach einem der Ansprüche 2 bis 8, wobei die Buchse (26) zylinderförmig ausgebildet ist und wenigstens abschnittsweise mit einem Aussengewinde versehen ist, ausgebildet zur gewindemässigen Aufnahme in ein korrespondierend in die Aufnahme (22) eingetragenes Innengewinde.

10. Schlauchkopplung (10) nach einem der Ansprüche 3 bis 9, wobei der Anschlag (36) an einer Seite, welche der Endfläche (34) der Aufnahme (22) zugewandt ist, mit wenigstens einem Vorsprung versehen ist.

11. Schlauchkopplung (10) nach einem der Ansprüche 3 bis 9, wobei der Anschlag (36) an einer Seite, welche der Endfläche (34) der Aufnahme (22) zugewandt ist, konvex ausgebildet ist.

12. Schlauchkopplung (10) nach einem der vorhergehenden Ansprüche, wobei das Rückschlagventil (20) ferner ein federelastisches Rückstellelement (30) umfasst, welches zwischen der Buchse (26) und dem Ventilkörper (28) eingespannt ist, wobei das federelastische Rückstellelement (30) eine Kraft an den Ventilkörper (28) in eine Richtung zum Öffnen des Rückschlagventils (20) anlegt.

13. Schlauchkopplung (10) nach Anspruch 3 und 12, wobei das federelastische Rückstellelement (30) den Ventilkörper (28) gegenüber der Buchse (26) derart federelastisch vorspannt, dass der Anschlag (36) gegen eine Endfläche (34) der Aufnahme (22) anschlägt.

14. Schlauchkopplung (10) nach einem der vorhergehenden Ansprüche, wobei eine Öffnung des ersten Pfades (44) aussermittig in die Endfläche (34) der Aufnahme (22) eingetragen ist.

15. Schlauchkopplung (10) nach einem der vorhergehenden Ansprüche, ferner umfassend einen Rückflussverhinderer (12) .

16. Hydrant, umfassend eine Schlauchkopplung (10) nach einem der vorhergehenden Ansprüche, ausgebildet zum Reduzieren einer Differenz zwischen dem Druck im Inneren des Hydranten und dem Druck der Aussenatmosphäre.

## Claims

1. Hose coupling (10) for a hydrant, wherein the hose coupling (10) comprises a ventilation device (18), wherein the ventilation device (18) comprises a non-return valve (20), which is accommodated in a receptacle (22) incorporated into an outer flange (24) of the hose coupling (10), wherein the ventilation device (18) further comprises a ventilation path (42) between the receptacle (22) and, in the assembled state, the interior of the hydrant, **characterized in that** the ventilation path (42) comprises a first path (44) extending in the external flange (24) between the receptacle (22) and an external thread (14) of the hose coupling (10), and a second path (46) adjoining the first path (44), the second path (46) being formed as a recess incorporated in the external thread (14) of the hose coupling (10) in the axial direction thereof or the second path being formed as a longitudinal bore within the material of the outer edge of the hose coupling.

2. Hose coupling (10) according to claim 1, wherein the non-return valve (20) comprises a bushing (26) insertable at least in sections into the receptacle (22) and a valve body (28) inserted at least in sections into the bushing (26) and adjustable in the axial direction of the bushing (26) .

3. Hose coupling (10) according to claim 2, wherein the valve body (28) comprises a cylinder section (32), which is inserted at least in sections into the bushing (26) and can be guided therein in the axial direction, and a stop (36) adjoining the cylinder section (32).

4. Hose coupling (10) according to claim 3, wherein the stop (36) projects radially above the cylinder section (32) .

5. Hose coupling (10) according to claim 3 or 4, wherein the stop (36) is adjustable in a section of the receptacle (22) between the bushing (26) and an end surface (34) of the receptacle (22).

6. Hose coupling (10) according to one of claims 3 to 5, wherein the non-return valve (20) further comprises a ring seal (38) arranged to circumferentially seal the stop (36) from the end face of the bushing (26) facing the stop (36) when the non-return valve (20) is in the closed state.

7. Hose coupling (10) according to claim 6, wherein the ring seal (38) is placed in a section around the cylinder portion (32).

8. Hose coupling (10) according to claim 6 or 7, wherein the end face of the bushing (26) facing the stop (36) is formed with a conically shaped sealing surface.

9. Hose coupling (10) according to one of claims 2 to 8, wherein the bushing (26) is cylindrical in shape and is provided at least in sections with an external thread, designed to be accommodated by threading in an internal thread correspondingly incorporated into the receptacle (22) .

10. Hose coupling (10) according to one of claims 3 to 9, wherein the stop (36) is provided with at least one projection on a side facing the end surface (34) of the receptacle (22).

11. Hose coupling (10) according to one of claims 3 to 9, wherein the stop (36) is of convex design on a side facing the end surface (34) of the receptacle (22).

12. Hose coupling (10) according to one of the preceding claims, wherein the non-return valve (20) further comprises a resilient return element (30) clamped between the bushing (26) and the valve body (28), wherein the resilient return element (30) applies a force to the valve body (28) in a direction to open the non-return valve (20).

13. Hose coupling (10) according to claim 3 and 12, wherein the resilient return element (30) resiliently pretensions the valve body (28) relative to the bushing (26) in such a way that the stop (36) abuts an end surface (34) of the receptacle (22).

14. Hose coupling (10) according to one of the preceding claims, wherein an opening of the first path (44) is inserted eccentrically into the end surface (34) of the receptacle (22).

15. Hose coupling (10) according to one of the preceding claims, further comprising a backflow preventer (12).

16. Hydrant, comprising a hose coupling (10) according to one of the preceding claims, designed to reduce a difference between the pressure in the interior of the hydrant and the pressure of the outside atmosphere.

## Revendications

1. Raccord de tuyau (10) pour une bouche d'incendie, le raccord de tuyau (10) comprenant un dispositif d'aération (18), le dispositif d'aération (18) comprenant un clapet anti-retour (20) qui est reçu dans un logement (22) inscrit dans une bride extérieure (24) du raccord de tuyau (10), le dispositif d'aération (18) comprenant en outre un chemin d'aération (42) entre le logement (22) et, à l'état monté, l'intérieur de la bouche d'incendie, **caractérisé, en ce que** le chemin d'aération (42) comprend un premier chemin (44) qui s'étend dans la bride extérieure (24) entre le logement (22) et un filetage extérieur (14) du raccord de tuyau (10), et un deuxième chemin (46) se raccordant au premier chemin (44), qui est réalisé sous la forme d'un évidement qui est inscrit dans le filetage extérieur (14) du raccord de tuyau (10) dans la direction axiale de celui-ci ou qui est réalisé sous la forme d'un perçage longitudinal à l'intérieur du matériau du bord extérieur du raccord de tuyau.

2. Raccord de tuyau (10) selon la revendication 1, dans lequel le clapet anti-retour (20) comprend une douille (26) pouvant être insérée au moins par sections dans le logement (22) et un corps de soupape (28) inséré au moins par sections dans la douille (26), lequel est réglable dans la direction axiale de la douille (26).

3. Raccord de tuyau (10) selon la revendication 2, dans lequel le corps de soupape (28) comprend une section cylindrique (32), qui est insérée au moins par sections dans la douille (26) et peut être guidée dans celle-ci dans la direction axiale, et une butée (36) se raccordant à la section cylindrique (32).

4. Raccord de tuyau (10) selon la revendication 3, dans lequel la butée (36) fait saillie radialement au-dessus de la section cylindrique (32).

5. Raccord de tuyau (10) selon la revendication 3 ou 4, dans lequel la butée (36) est réglable dans une partie du logement (22) entre la douille (26) et une face d'extrémité (34) du logement (22).

6. Raccord de tuyau (10) selon l'une des revendications 3 à 5, dans lequel le clapet anti-retour (20) comprend en outre un joint annulaire (38) qui est agencé pour assurer l'étanchéité périphérique de la butée (36) à l'état fermé du clapet anti-retour (20) par rapport à la face frontale de la douille (26) tournée vers la butée (36).

7. Raccord de tuyau (10) selon la revendication 6, dans lequel le joint annulaire (38) est appliqué dans une section autour de la section cylindrique (32).

8. Raccord de tuyaux (10) selon la revendication 6 ou 7, dans lequel la face frontale de la douille (26) tournée vers la butée (36) est réalisée avec une surface d'étanchéité de forme conique.

9. Raccord de tuyau (10) selon l'une des revendications 2 à 8, dans lequel la douille (26) est de forme cylindrique et est pourvue au moins par endroits d'un filetage extérieur, conçu pour être reçu par filetage dans un filetage intérieur inscrit de manière correspondante dans le logement (22).

10. Raccord de tuyau (10) selon l'une quelconque des revendications 3 à 9, dans lequel la butée (36) est munie d'au moins une saillie sur un côté faisant face à la face d'extrémité (34) du logement (22).

11. Raccord de tuyau (10) selon l'une des revendications 3 à 9, dans lequel la butée (36) est convexe sur un côté faisant face à la face d'extrémité (34) du logement (22).

12. Raccord de tuyau (10) selon l'une quelconque des revendications précédentes, dans lequel le clapet anti-retour (20) comprend en outre un élément de rappel élastique (30) serré entre la douille (26) et le corps de clapet (28), l'élément de rappel élastique (30) appliquant une force au corps de clapet (28) dans une direction pour ouvrir le clapet anti-retour (20).

13. Raccord de tuyaux (10) selon les revendications 3 et 12, dans lequel l'élément de rappel élastique (30) précontraint élastiquement le corps de soupape (28) par rapport à la douille (26) de telle sorte que la butée (36) vient buter contre une surface d'extrémité (34) du logement (22) .

14. Raccord de tuyau (10) selon l'une des revendications précédentes, dans lequel une ouverture du premier chemin (44) est inscrite de manière excentrée dans la face d'extrémité (34) du logement (22).

15. Raccord de tuyau (10) selon l'une quelconque des revendications précédentes, comprenant en outre un empêcheur de reflux (12).

16. Bouche d'incendie comprenant un raccord de tuyau (10) selon l'une des revendications précédentes, conçu pour réduire une différence entre la pression à l'intérieur de la bouche d'incendie et la pression de l'atmosphère extérieure.
